# EUROPEAN PATENT SPECIFICATION

(11) **EP 2 078 625 B1**
(45) Date of publication and mention of the grant of the patent: **07.12.2011**
(21) Application number: 08172963.4
(22) Date of filing: 29.12.2008
(51) Int. Cl.: B60C 25/04, B60C 25/135

(54) **Device to ease the mounting or demounting of tyres**
Vorrichtung zur Erleichterung der Montage oder Demontage von Reifen
Appareil pour faciliter le montage ou le démontage d'un pneumatique de vehicule

(30) Priority: 10.01.2008 DE 102008003781
(43) Date of publication of application: 15.07.2009
(73) Proprietor: Societa' Italiana Costruzioni Elettromeccaniche- S.I.C.E.-S.p.A., 42015 Correggio (RE) (IT)
(72) Inventor: Immler, Michael, 87509 Immenstadt (DE)
(74) Representative: Conti, Marco

(56) References cited:
- EP-A- 1 167 089
- EP-A- 1 314 584
- DE-A1- 1 480 989
- FR-A- 402 820
- US-B1- 6 269 861

## Description

The invention relates to a device for facilitating mounting or demounting tyres of a vehicle onto and from a rim.

In the invention, the expression vehicle tyres is taken to mean all tyres to be mounted on a rim preferably provided with a channel. The term "vehicle tyre" is not limited to road vehicles, but should be taken in the broadest sense of the term. For example vehicle tyres also comprise the tyres of an aeroplane undercarriage, which can be mounted or demounted with the device of the invention.

A typical applicational example of the mounting device of the invention relates to UHP or RFT tyres, and also truck tyres which are difficult to mount, as well as two-wheeled vehicle tyres, such as for example tyres of motor cycles or bicycles.

In the prior art, mounting vehicle tyres without damaging the tyres, the rim or the channel of the rim is always a problem. The bead diameter is always slightly smaller than the diameter of the edge of the rim in order to guarantee secure fixing of the vehicle tyre on the rim. It is however necessary to exert a great deal of force to mount the tyre on the rim, passing the bead of the tyre over the edge of the rim, and for this reason the use of special devices etc. for this purpose is sufficiently known.

However, often sharp tools are used to raise the bead over the edge of the rim, which can cause damage to the rim edge, the channel of the rim and/or the bead or the tyre itself. This damage can have a negative effect on the seal of the vehicle tyre and can lead to a high risk of accident if the tyre loses air uncontrolledly during movement at considerable speed.

US 6 269 861 shows a tool to mount or dismount tyres, the tool having a body with a seat suitable to engage with the edge of the rim and, at opposite sides of said seat, there are respectively a handle and a roller. The roller is suitable to exert a pressure downwards on the rim. The roller is not directly interposed between the bead and the edge of the rim, but needs the presence of the mentioned seat to pivot on the rim itself.

FR 402 820 shows a tool to mount or demount tires from a rim, whereby the tool has a group of gears suitable to make to rotate two lateral frusto-conical rollers having concave profile and a further central frusto-conical roller also having a concave profile, such roller group being configured according a isosceles triangle.

In a demounting operation, the frusto-conical roller is placed with his wider base towards the external and, thanks to the use of a turnpike, the two lateral rollers rotate - in the same direction - on the edge of the rim allowing the central roller to demount the tire. Similar operations are needed to mount the tire.

DE 1 480 989 shows a demounting tool in which a handle is provide to which a plate is connected, the plate having two extremities. On the first extremity a first roller is fixed, the roller being suitable to be interposed between the bead of the tire and the rim and, on the second extremity, a second roller which is suitable to follow the external profile of the rim in order to guide the tool in the mounting operation.

EP 1 647 089 shows a device for mounting tires, the device having inserts that prevent puncturing the tire.

The device has also a pressing element destined to press a side of the tire. The pressing element is provided with an arched portion, said portion having a plurality of rollers configured in order to follow the curved profile of the tire.

It is known from US5993377A1 a sex toy comprising a plurality of anal beads coupled to a string.

According to the features of the preamble of claim 1, document DE19729416 shows a bead depressor for use upon fitting or removal of a tire, comprising a plurality of depressor elements rigidly connected together by a cable, and a clamping bar which can be arrested in a wheel centering bore. The first depressor element which in use is fixed on the rim flange of the wheel is connected to the clamping bar by a holding rod member and an additional elastic clamping element is operative between the clamping bar and the first depressor element to urge the latter substantially radially against the rim flange and to tilt the clamping bar to arrest it in the centring bore in the wheel.

Taking its inspiration from the present state of the art, the aim of the invention is to provide a mounting device enabling mounting or demounting of a vehicle tyre on a rim without damaging the tyre of the vehicle or the rim.

This task is performed by used of a mounting device as described in the preamble hereto, which exhibits at least a rotating body rotating about an axis.

For mounting or demounting, the rotating body is arranged between the bead and the rim edge. The rotating body, during mounting or demounting operations, rolls at least partially on the flank of the tyre or the edge of the rim. At the same time, the rotating body distances the bead from the edge of the rim, thus further simplifying the insertion of the bead in a deeper section of the rim, for example the channel of the rim, i.e. a section having a smaller diameter.

The configuration is so practical that it is sufficient to block the rotating body in the upper section of the rim edge, i.e. at the top of the rim edge, between the rim and the flank of the tyre, as due to the blocking movement of the tyre the tyre flank is radially displaced with respect to the tyre and it is necessary to overcome only the revolving friction of the tyre flank on the rotating body or the rotating body on the rim edge. Further, as previously described, the bead is pushed or distanced from the rim edge to such an extent that the front edge of the bead can easily insert in the rim channel. These are two ideal properties of the invention which aid one another. Further, the rolling movements of the rotating body on the tyre flank on the one side and on the rim edge on the other side are not reciprocally opposite, but act in a same direction. In this case there is therefore no sliding or blocking due to the movement, but a very simple and effective transport of the bead for mounting or demounting onto or from the rim edge in the rim channel, without damaging the rim edge, the bead or the tyre flank with sharp-edged tools, otherwise known in the prior art for inserting the bead in the rim channel for mounting or demounting.

It is therefore clear that the mounting device considerably simplifies the operative's work, as it is sufficient to automatically block the mounting device between the tyre and the rim and therefore the operative has his or her hands free to continue the mounting or demounting of the tyre on or from the vehicle.

Mounting levers or further sharp manual tools known from the prior art must be maintained in the relative positions thereof by the operative, obviously limiting the operative's freedom of movement.

A considerable advantage of the invention is given in particular by the fact that the mounting tool of the device is also usable as a supplementary article for already-available mounting devices known to tyre operatives, without its being necessary to further modify these mounting devices. It is thus possible to mount new and high-quality tyres, otherwise difficult to mount, using mounting devices which are effectively unsuitable in terms of absolute safety, without causing damage to the vehicle tyre or rim.

For correct mounting of the tyre, the invention exploits the radial tension present during the process of mounting.

The mounting procedure will now be briefly described by way of example.

The starting situation includes the lower bead already being arranged on the rim, i.e. below the edge of the upper rim. For the mounting of the upper bead, the rim is mounted using the mounting head of a mounting device and then the tyre is placed under tension. For this purpose, the mounting head exerts a generally perpendicular pressure with respect to the rim on the tyre flank and thus pushes the upper bead below the edge of the upper rim. Since the diameter of the bead is smaller than the diameter of the upper rim edge, even by exerting a greater force it is no longer possible to push the upper bead below the upper rim edge. The mounting process is thus briefly interrupted and the mounting tool of the device is blocked between the rim edge and the bead. Then the mounting process is slowly continued. This means that the mounting head further presses the bead from above downwards, and in this way the tension in the bead respectively increases. Thanks to the rotating bodies made in the form of rollers, the bead automatically inserts in the rim channel due to the tension present. Differently to known mounting devices, the tension that develops during the mounting process is exploited positively to bring the bead into the rim channel.

A variant of the invention comprises, for example for the applicational sector of bicycle tyres, its being sufficient to have a mounting device provided only with one rotating body, possibly also fixed, i.e. not mounted such as to rotate. The effect of the invention is based on the fact that instead of a sliding of the rim on the rim edge and a contacting or blocking of the bead on the rim hump, with the invention there is a rolling thanks to the rolling body. The invention also includes a sliding movement, possibly combined with a rolling movement of the rotating body, on the flank of the tyre or on the edge of the rim.

A variant of the invention includes the mounting device comprising a plurality of rotating bodies, arranged reciprocally flexibly and mounted respectively such as to be able to rotate. This configuration enables guiding a greater sector of the bead. The configuration is selected such that the mounting device comprises several rotating bodies, arranged in sequence, which follow the rim profile. This is obtained for example with a flexible realisation of the mounting device which also enables an adapting of the mounting device to different tyre rims or diameters.

In a further preferential variant of the invention the mounting device exhibits rotating bodies having different diameters. Alternatively, it is obviously possible to predispose the mounting device with only rotating bodies having the same diameter. The use of rotating bodies having different diameters, especially if the bodies are arranged such that the rotating body having the longest diameter is in the centre flanked by rotating bodies having slightly smaller diameters, considerably simplifies the mounting process. The aim of the mounting device of the invention is that the bead, at least in a determined sector thereof, inserts in the rim channel such that the bead in the opposite sector of the rim displaces radially towards in an external direction such as to be able to slide over the rim edge. During the mounting process, the preferably round shape of the bead is thus deformed to obtain an ellipse. The reduction of the diameters of the rotating bodies of the mounting device of the invention ideally supports this elliptical mounting shape of the bead thus created. Normally the bead is no longer in the rim channel at the points in which the rotating bodies having smaller diameter are arranged.

The configuration of the invention is selected such that the diameter of the rotating body corresponds to the width of the rim shoulder, also known as a hump. With this realisation of the rotating body, the bead is distanced by the width of the hump of the tyre from the edge of the rim and brought to an axial position (relating to the rotation axis of the rim) of the rim channel. In this way only a radial movement is necessary for this section of the bead to insert into the rim channel close to the rim hump. This process can obviously be further simplified with the use of suitable liquid mounting lubricants etc. The diameter of the rotating body can also be slightly smaller than the width of the rim hump. The greater diameters of the rotting body of a mounting device comprising several rotating bodies are however at least more or less identical or even slightly greater than the width of the rim hump.

In a variant of the invention, small-diameter spacers can be arranged between the rotating bodies. The spacers are realised such that normally they are not in contact with the rim edge and/or the tyre flank. It has been found that it is sufficient for the rotating bodies to be arranged at a certain distance from one another in the mounting device in order to guarantee an optimal guide for the bead in the rim channel. The only-partial contact on the rotating body reduces the friction and the force necessary for inserting the bead into the rim channel.

The spacers are made, for example, of metal, aluminium or iron, or plastic.

In a preferable development of the invention, the rotating body is made of plastic. The use of plastic as a material, which on one side contacts the rim and on the other side contacts the tyre rim, exhibits the advantage of not causing damage or deterioration. In particular plastic resistant to abrasion or friction is used, such as for example polyamide or Teflon.

The rotating body is preferably arranged on a cable, for example a metal cable, and is preferably rotated thereon. The rotating body is made for example of a solid material in a cylindrical shape with a hole in the centre, through which the cable is fed, which cable at other points thereof is flexible and goes to constitute in the internal section of the rotating body a shaft for rotating movement of the rotating body about an axis.

It is obviously possible to include numerous rotating bodies on the cable, for example separated by special spacers. The advantage of the use of the mounting tool of the device is given by the fact that it is easy to handle and use and therefore is also simpler to deassemble, in particular if an end of the mounting device or cable exhibits a loop or a handle. The flexibility of the cable further enables storing or transporting the mounting device without there being any need for much space. The realisation of the mounting device using a cable enables the device to be prepared simply, for example for other rim or tyre structures, for example if the diameter of the rotating body has to be adapted to another width of the rim hump. Obviously the cable can also be adapted very easily to various rim diameters.

Regarding the cable, for example a metal cable of a certain thickness can be used, for example a few millimetres (5mm or 8mm). However, it is also possible to use cables made of synthetic materials. The traction stress of the cable is relatively low, as the cable serves for the correct arranging and guiding of the single rotating bodies in the space between the rim edge and the bead.

In a variant of the invention, the longitudinal position of the rotating body is defined on the cable, or the rotating body is only limitedly mobile. This is also possible for the spacers. In this way an ordered configuration of the rotating bodies is obtained on the mounting device. On the other hand, a certain longitudinal mobility of the rotating bodies on the mounting device enables a simplified adapting to rims having a special shape or problematic edges.

In a further variant of the invention, the mounting device is realised using numerous connected chain links and the rotating body is part of a link. With the use of a chain the mounting device is still flexible and adaptable to the diameter of the rim. The single links of the chain are connected to one another with sections of cable or chain links of a different type. The link itself comprises a shaft-like support for the rotating body, such that the body can suitably support the thrusting movement of the bead in the rim channel.

The mounting device of the invention comprises both a realisation in which only a link of the chain has a respective rotating body, or a realisation in which numerous links of the chain are provided with rotating bodies. In a realisation including the connecting elements between the chain links being provided with rotating bodies (which for example can be identical to the chain links or can be realised in the form of different connecting elements, such as sections of cable, etc.), it is possible to modify the distance between the single rotating bodies and it is not necessary to use separated spacers.

In a further variant of the invention, the mounting device can be realised as a manual tool or as a device, where the manual tool or the device exhibits a shaft in order to enable rotation of the rotating body. This configuration exhibits, for example, a structure or a guide for the rotating bodies and the mounting tool of the device made in this way can comprise one alone or numerous rotating bodies. The realisation of a mounting device in this way simplifies the use thereof, as the configuration of the rotating bodies in the manual tool or the device is already suited to the shape of the rim.

Further, the invention also comprises a mounting system constituted by a mounting device for mounting or demounting a tyre of a vehicle onto or from a rim and a mounting tool, as previously described.

For mounting or demounting a tyre to or from a rim the prior art includes special mounting devices. Also known are vertical or horizontal configurations. There follows a description of a horizontal configuration, without limiting the invention thereto. The invention can be used in the same way with a vertical configuration of rim for the mounting or demounting procedure. Mounting devices are constituted by a housing plane on which the rim is arranged and blocked. Further, mounting devices also comprise a mounting head which simplifies the mounting or demounting of a vehicle tyre on the rim thus blocked. In particular, a mounting head of this type is perpendicularly mobile with respect to the rim, or exerts a respective force. The invention comprises both mounting devices for which a relative movement is included between the tyre and the mounting head in a perimetral direction of the tyre, and also includes variants in which no such relative movement is comprised.

In the variant of the invention, the mounting device exhibits a mounting head able to act on the flank of the tyre at a mounting point, whereat the bead is above the rim edge, with an almost perpendicular movement with respect to the rim. With the perpendicular movement, the bead, for example the lower or upper bead, is pushed from a position above the rim edge into a position below the rim edge, i.e. above the rim. This is advantageously achieved with a perpendicular movement with respect to the plane defined by the rim. However the invention does not specify this point in detail, as obviously the invention also comprises any other movement which exhibits perpendicular components. The mounting point is described as the point at which the bead is displaced by the mounting head above the rim edge. This is true both for mounting and demounting.

A further development of the invention comprises that the mounting tool is arranged on the vehicle tyre or on the rim, in an opposite sector the mounting point. With the pressing movement of the mounting head on the mounting point, a respective tension is generated in the bead, which has to be displaced above the rim edge. This corresponds to the upper bead, in reference to the traditional mounting configuration in which a rim is arranged on the mounting plane and the mounting head is applied from above against the rim.

With the lowering movement of the mounting head, the initially circular bead is placed under tension and deformed into an ellipse and in an opposite sector to the mounting point, in reference to the centre of the rim or the rotation axis of the wheel, a respective thrust is generated which, by means of the mounting tool, is exploited such that the sector of the bead (upper) which is below the rim edge inserts into the rim channel.

In this way, with the movement of the mounting head on the flank of the tyre, the mounting system of the invention enables a radial thrust to be exerted on the bead in the sector of the mounting tool which is below the rim edge and the rotating body rolls, at least partially, on the flank of the tyre or on the rim edge such that the section of bead inserts into the rim channel.

By the term "radial thrust" it is meant that the bead passes from an external position to the channel to a position inside the rim channel. This movement exhibits radial components.

Clearly, both for mounting and demounting the tyre, it is advantageous that with the mounting tool of the invention a sector of the bead (upper) inserts in the rim channel and in this way the bead (upper) at another opposite point to this sector, in reference to the centre of the rim (the axis of the wheel), can be displaced radially by sections towards the outside such that the bead can be displaced without difficulty, possibly by applying a smaller thrust (even by hand) above the rim edge.

The invention further comprises a procedure for mounting or demounting a vehicle tyre to or from a rim in which at least a rotating body of the mounting tool, as previously described, is arranged between the rim edge and the upper bead and thus an at least partially-radial thrust is exerted on the upper bead in the sector where the mounting device is located. In this way, the tyre flank moves at least partially because of a rolling of the rotating body and at least a section of the upper bead inserts in the rim channel.

The procedure described by the invention considerably simplifies the mounting or demounting procedure of a vehicle tyre. The described procedure can further be realised in an automatic or manual mounting system.

It has already been stressed that the invention also comprises a combination of a rolling movement and a sliding movement. In a variant of the invention reference has already been made to a more-or-less fixed rotating body, which modifies at least the axial position of the bead with respect to the edge of the rim such that the radial thrust enables the bead to be pushed without difficulty into the rim channel. To obtain the effect described by the invention, the respective components of movement in the indicated directions are already sufficient.

The thrust of the invention which acts at least partially in a radial direction (in reference to the wheel axis) is deviated by the more-or-less perpendicular movement of the mounting head with respect to the rim. In this way the movement, in any case present, of the mounting head and the tension which develops during the mounting or demounting process is positively exploited in order to bring the bead into the rim channel. It is clear and it has already been described that the movement of the mounting head comprises components which are perpendicular with respect to the rim. These are comprised in the term "perpendicular" and are part of the invention.

After a section of the bead has been inserted in the rim channel, it is possible to move the upper bead into a mounting point above the rim edge. This is true both for the mounting and demounting procedures. The mounting point is the sector in which the mounting head acts on the vehicle tyre.

In this regard it is especially stressed that all the characteristics and properties described in reference to the mounting tool or the mounting system of the invention, as well as the process procedures according to the process of the invention, are to be considered transferable and, in the sense of the invention, usable and disclosed with the invention. This is also true in the contrary sense, i.e. the construction characteristics, i.e. the specifications of the devices, cited in reference to the procedure, can be held in consideration and claimed in the claims for the mounting tool or the mounting system and are also an integral part of the invention and the disclosure thereof.

The invention is schematically represented in the drawings. The figures of the drawings are as follows:
Figure 1 is an illustration from above of the mounting tool of the device described by the invention;
Figure 2 is an illustration from above of the use of the mounting tool of the device of the invention; and
Figure 3 is a section made along line III-III, as in figure 2.

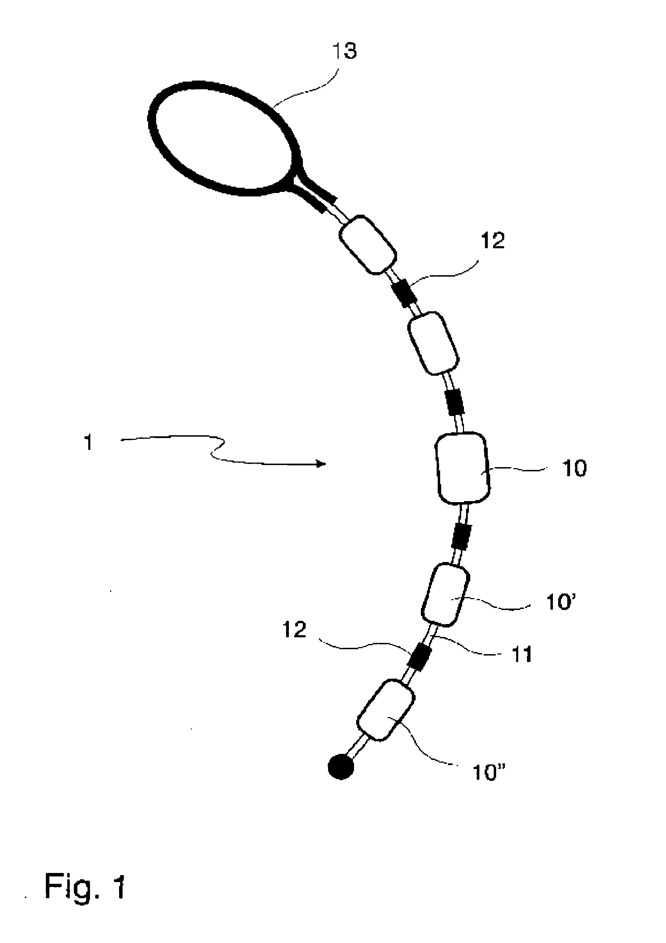

Figure 1 shows a mounting tool 1 of the device of the invention. In this case, five rotating bodies 10, 10', 10" are arranged in sequence on a cable 11, which for example is made of metal. The rotating body 10 arranged at the centre, in third position, exhibits the biggest diameter. Spacers 12 are arranged between the rotating bodies. The rotating bodies 10, 10', 10" exhibit a cylindrical shape to enable a rolling movement. Starting from the centre (rotating body 10) and displacing extemalwise, at the end of the cable 11 there are further rotating bodies 10', 10" with respective diameters which progressively get smaller. In this way, the diameter of the rotating body 10' is less than the diameter of the rotating body 10 arranged at the centre, and the diameter of the rotating body arranged at the end 10" is less than the diameter of the rotating body 10'.

An end of the mounting tool is provided with a handle 13 which simplifies in particular the removal of the mounting tool at completion of mounting.

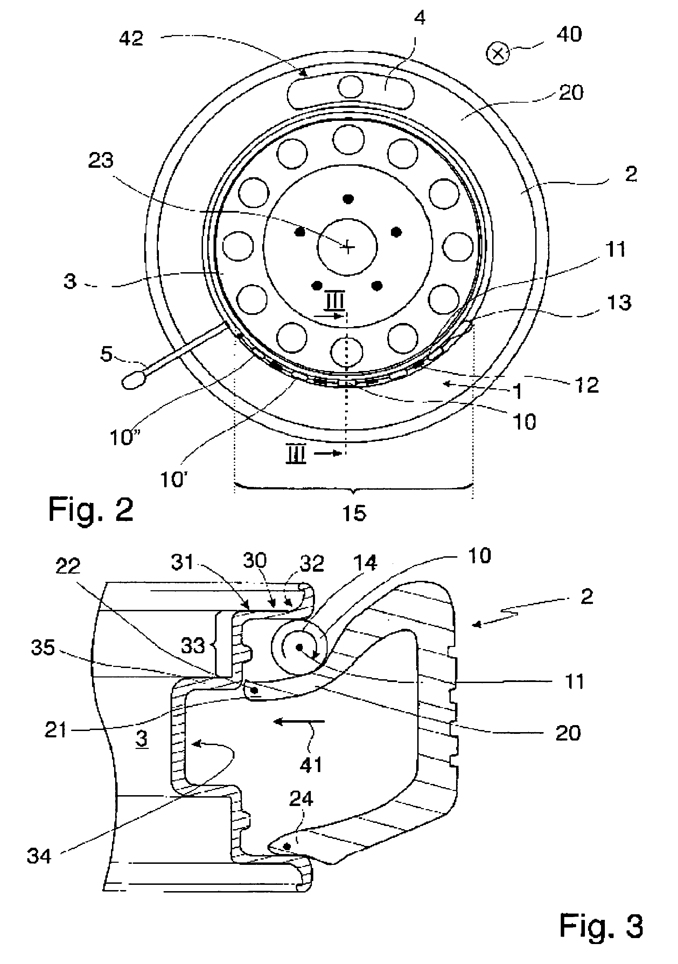

Figure 2 schematically illustrates the mounting tool 1 described by the invention. The wheel in the figure is constituted by a vehicle tyre 2 to be mounted on a rime 3. The rim 3 is adequately blocked on the mounting device, while the details of the device are not shown in the figure, with the exception of the mounting head 4.

The upper section includes the mounting head 4 which is mobile in a perpendicular direction with respect to the rim or the plane (see arrow 40) and exerts a pressure on the tyre flank 20.

The section where the mounting head 4 acts on the tyre flank 20 is distinguished as the mounting point 42. This point exhibits a certain section at the circumference on the tyre flank 20.

In reference to the axis of the wheel 23, opposite the mounting point 42 a sector 15 is distinguished where the mounting tool 1 of the device is applied. In the illustrated example of the invention (without limiting the invention) the section of the angle at the circumference of the sector 15 is greater than the section of the angle at the circumference of the mounting point 42.

The mounting tool is applied in the sector 15 corresponding to the embodiment of the invention shown in figure 1.

The functioning of the invention is obvious in particular from the detail of figure 3.

The use of the mounting tool 1 of the invention begins at the moment when the lower bead 24 is already completely applied on the rim 3 and the upper bead 21, which is reinforced and supported with a metal cable 22, at least in the sector denoted by 15 (in figure 2, bottom half), is below the rim edge 30, while at the mounting point 42 (in figure 2 in the top half, radially opposite the sector 15 in reference to the central axis 23), the bead is sill above the rim edge 30.

With the help of a manual tool 5, the space between the rim edge 30 and the tyre flank 20 with the bead (upper) 21 is widened such that it is possible to insert the rotating bodies 10, 10', 10" in the space that forms.

With a downwards movement (arrow 40) of the mounting head 4, a considerable tension is generated in the upper bead 21 or in the metal cable 22 supporting it. This results in a thrust 41 which acts radially in the direction of the wheel axis 23.

The use of the rotating body 10 therefore has two effects. On the one hand the upper bead 21 is distanced from the rim edge 30 in the direction of the rim channel 34 and on the other hand the bead's rolling on the rotating body 10 with respect to a thrusting and sliding movement on the rim edge 30 is simplified.

The rim edge 30 is subdivided into the external top of the rim edge 32, which in this case exhibits a shaped profile, and the internal base of the rim edge 31, located below. The base of the rim edge 31 is more-or-less a right angle and the rim continues with the hump 33 which constitutes the section which is parallel to the wheel axis 23. The rim hump 33 is connected directly to the rim channel 34.

It is obvious that in this case the invention can be used in the same way for any other rim. The invention is absolutely not limited to the specific embodiment of the rim represented in the figures.

In particular the mounting tool is suited to mounting vehicle tyres on solid single-channel rims.

As a result of the thrust 41 the upper bead 21 and thus also the tyre flank 20 of figure 3 are displaced towards the left, the rotating body 10 performs a rotating downwards movement 14 about the axis of the cable 11 in a clockwise direction.

Owing to the rotating movement 14 the rotating body 10 which at the outset had been blocked in the sector at the top of the rim edge 32, rolls downwards in the direction of the base of the rim edge 31. At the same time the rotating body 10 rolls on the tyre flank 20 and pushes the upper bead 21 into the rim channel 34. During this process, thanks to the rotating body 10, the position of the bead 21 is already such that the bead can run without problems on the wall 35 delimiting the rim channel 35.

## Claims

1. A device for easing mounting or demounting of a vehicle tyre onto or from a rim, wherein said device comprises at least a rotating body which rotates about an axis, and is inserted onto a cable (11) **characterized in that** the at least a rotating body (10)
can rotate on the cable (11), wherein the at least a rotating body (10) is in the form of a roller having cylindrical shape and is suitable for being arranged between a tyre bead and a rim edge, whereby, in operation, the rotating body is rollable on a tyre flank (20) pushing the upper tyre bead (21) into a rim channel (34).

2. The device of claim 1, **characterised in that** the rotating body (10), during the mounting or demounting, is arranged between a tyre bead (21) and a rim edge (30), and the rotating body (10), during the mounting or demounting, rolls at least partially on a tyre flank (20) and/or on the rim edge (30), or displaces from a top of the rim edge (32) towards a base of the rim edge (31).

3. The device of one or both the preceding claims, **characterised in that** the mounting tool (1) comprise numerous rotating bodies (10) arranged flexibly to one another and mounted respectively such that the rotating bodies (10) can rotate.

4. The device of one or more of the preceding claims, **characterised in that** the mounting tool (1) comprises numerous rotating bodies (10) arranged in a sequence following a shaped profile of the rim.

5. The device of one or more of the preceding claims, **characterised in that** rotating bodies (10, 10', 10") having different diameters are included on the mounting tool (1).

6. The device of one or more of the preceding claims, **characterised in that** the rotating bodies (10) having a greater diameter are arranged at a centre, between rotating bodies (10, 10', 10") having slightly smaller diameters.

7. The device of one or more of the preceding claims, **characterised in that** a diameter of the at least a rotating body (10) corresponds to a width of a rim hump (33).

8. The device of one or more of the preceding claims, **characterised in that** smaller-diameter spacers (12) are arranged between the at least a rotating body (10).

9. The device of one or more of the preceding claims, **characterised in that** the at least a rotating body (10) is made of plastic.

10. The device of one or more of the preceding claims, **characterised in that** the mounting tool (1) or the cable (11) exhibits a loop (13) or a handle at each end thereof.

11. The device of one or more of the preceding claims, **characterised in that** a longitudinal position of the at least a rotating body (10) on the cable (11) is fixed or only limitedly mobile.

12. The device of one or more of the preceding claims, **characterised in that** the mounting tool (1) is constituted by numerous chain links connected to one another and **in that** the at least a rotating body (10) is part of a link.

13. The device of one or more of the preceding claims, **characterised in that** the mounting tool (1) is a manual tool or a device and **in that** it exhibits a shaft such as to enable rotation of the at least a rotating body (10).

14. A mounting system constituted by a mounting device for mounting or demounting a vehicle tyre (2) onto or from a rim (3) and by a mounting tool (1) as in one or more of the preceding claims.

15. The mounting system of claim 14, **characterised in that** the mounting device exhibits a mounting head (4) able to act on a tyre flank (20) at a mounting point (42), wherein a bead (21) is located above a rim edge (30), in a movement (40) which is practically perpendicular to the rim (3).

16. The mounting system of either or both claims 14 and 15, **characterised in that** the mounting tool (1) is arranged on a vehicle tyre (2) or on a wheel rim (3) in a sector (15) thereof which is opposite the mounting point (42).

17. The mounting system of one or more of claims from 14 to 16, **characterised in that** the rotating body (10) is configured in such a way that,
said rotating body (10) rolls at least partially on the tyre flank (20) or on the rim edge (30) such that the section of bead (21) inserts in a channel (34) of the rim (3), when, with the movement of the mounting head (4) on the tyre flank (20), a radial thrust (41) acts on the bead (21) in the sector of the mounting tool (1) which is below the rim edge (30).

18. A procedure for mounting or demounting a vehicle tyre onto or from a rim, wherein at least a rotating body of the mounting tool (1), as in one or more of claims from 1 to 13, is arranged between the rim edge (30) and an upper bead (21) and an at least partially-radial thrust is therefore exerted on the upper bead (21) in a sector (15) thereof where the mounting device is positioned, such that the tyre flank (20) at least partially displaces by means of a rolling movement of the rotating body (10) and at least a section of the upper bead (21) inserts in the rim channel (34).

19. The procedure of claim 18, **characterised in that** the thrust of the movement of the mounting head (4) is deviated almost perpendicular to the rim (3).

20. The procedure of one or both claims 18 and 19, **characterised in that** after a section of the bead (21) has inserted into the rim channel (34), the upper bead is pushed into a mounting point over the rim edge.

## Patentansprüche

1. Vorrichtung zur Erleichterung der Montage oder Demontage eines Fahrzeugreifens auf eine oder von einer Felge, wobei die Vorrichtung mindestens einen rotierenden Körper umfasst, der um eine Achse rotiert und auf einem Kabel (11) eingeführt ist, **dadurch gekennzeichnet, dass** der mindestens eine rotierende Körper (10) auf dem Kabel (11) rotieren kann, wobei der mindestens eine rotierende Körper (10) in Gestalt einer Walze vorliegt, die eine zylindrische Form aufweist und dafür geeignet ist, zwischen einem Reifenwulst und einem Felgenrand angeordnet zu werden, wobei der rotierende Körper im Betrieb auf einer Reifenflanke (20) rollbar ist, wobei der obere Reifenwulst (21) in einen Felgenkanal (34) gedrückt wird.

2. Vorrichtung nach Anspruch 1, **dadurch gekennzeichnet, dass** der rotierende Körper (10) während der Montage oder Demontage zwischen einem Reifenwulst (21) und einem Reifenrand (30) angeordnet ist und der rotierende Körper (10) während der Montage oder Demontage zumindest zum Teil auf einer Reifenflanke (20) und/oder auf dem Felgenrand (30) rollt oder sich von einer Oberseite der Felgenrands (32) zu einer Unterseite des Felgenrands (31) verschiebt.

3. Vorrichtung nach einem oder beiden vorangehenden Ansprüchen, **dadurch gekennzeichnet, dass** das Montagewerkzeug (1) eine Vielzahl von rotierenden Körpern (10) umfasst, die flexibel aneinander angeordnet sind und jeweils so montiert sind, dass die rotierenden Körper (10) rotieren können.

4. Vorrichtung nach einem oder mehreren der vorangehenden Ansprüche, **dadurch gekennzeichnet, dass** das Montagewerkzeug (1) eine Vielzahl von rotierenden Körpern (10) umfasst, die in einer Reihe angeordnet sind, die einem geformten Profil der Felge folgt.

5. Vorrichtung nach einem oder mehreren der vorangehenden Ansprüche, **dadurch gekennzeichnet, dass** die rotierenden Körper (10, 10', 10"), die verschiedene Durchmesser aufweisen, auf dem Montagewerkzeug (1) eingeschlossen sind.

6. Vorrichtung nach einem oder mehreren der vorangehenden Ansprüche, **dadurch gekennzeichnet, dass** die rotierenden Körper (10), die einen größeren Durchmesser aufweisen, in einer Mitte zwischen rotierenden Körpern (10, 10', 10") angeordnet sind, die etwas kleinere Durchmesser aufweisen.

7. Vorrichtung nach einem oder mehreren der vorangehenden Ansprüche, **dadurch gekennzeichnet, dass** ein Durchmesser des mindestens einen rotierenden Körpers (10) einer Breite eines Felgenhumps (33) entspricht.

8. Vorrichtung nach einem oder mehreren der vorangehenden Ansprüche, **dadurch gekennzeichnet, dass** zwischen dem mindestens einen rotierenden Körper (10) Abstandhalter (12) mit kleinerem Durchmesser angeordnet sind.

9. Vorrichtung nach einem oder mehreren der vorangehenden Ansprüche, **dadurch gekennzeichnet, dass** der mindestens eine rotierende Körper (10) aus Kunststoff hergestellt ist.

10. Vorrichtung nach einem oder mehreren der vorangehenden Ansprüche, **dadurch gekennzeichnet, dass** das Montagewerkzeug (1) oder das Kabel (11) eine Schlaufe (13) oder einen Griff an jedem seiner Enden aufweist.

11. Vorrichtung nach einem oder mehreren der vorangehenden Ansprüche, **dadurch gekennzeichnet, dass** eine Längsposition des mindestens einen rotierenden Körpers (10) auf dem Kabel (11) fixiert oder nur begrenzt beweglich ist.

12. Vorrichtung nach einem oder mehreren der vorangehenden Ansprüche, **dadurch gekennzeichnet, dass** das Montagewerkzeug (1) aus einer Vielzahl von Kettengliedern besteht, die miteinander verbunden sind und dass der mindestens eine rotierende Körper (10) Teil eines Gliedes ist.

13. Vorrichtung nach einem oder mehreren der vorangehenden Ansprüche, **dadurch gekennzeichnet, dass** das Montagewerkzeug (1) ein manuelles Werkzeug oder eine Vorrichtung ist und dass sie eine Welle aufweist, sodass eine Rotation des mindestens einen rotierenden Körpers (10) ermöglicht wird.

14. Montagesystem, bestehend aus einer Montagevorrichtung zur Montage oder Demontage eines Fahrzeugreifens (2) auf eine oder von einer Felge (3) und aus einem Montagewerkzeug (1) nach einem oder mehreren der vorangehenden Ansprüche.

15. Montagesystem nach Anspruch 14, **dadurch gekennzeichnet, dass** die Montagevorrichtung einen Montagekopf (4) aufweist, der dazu fähig ist, in einer Bewegung (40), die praktisch lotrecht zur Felge (3) ist, an einem Montagepunkt (42) auf eine Reifenflanke (20) einzuwirken, wobei sich ein Wulst (21) über einem Felgenrand (30) befindet.

16. Montagesystem nach einem oder beiden Ansprüchen 14 und 15, **dadurch gekennzeichnet, dass** das Montagewerkzeug (1) auf einem Fahrzeugreifen (2) oder auf einer Radfelge (3) in einem Bereich (15) davon angeordnet ist, der dem Montagepunkt (42) gegenüber liegt.

17. Montagesystem nach einem oder mehreren der Ansprüche 14 bis 16, **dadurch gekennzeichnet, dass** der rotierende Körper (10) derart konfiguriert ist, dass der rotierende Körper (10) zumindest zum Teil derart auf der Reifenflanke (20) oder auf dem Felgenrand (30) rollt, dass der Wulstabschnitt (21) in einen Kanal (34) der Felge (3) eingeführt wird, wenn mit der Bewegung des Montagekopfes (4) auf der Reifenflanke (20) ein Radialschub (41) auf den Wulst (21) im Bereich des Montagewerkzeugs (1) einwirkt, der unter dem Felgenrand (30) liegt.

18. Verfahren zur Montage oder Demontage eines Fahrzeugreifens auf eine oder von einer Felge, wobei mindestens ein rotierender Körper des Montagewerkzeugs (1), nach einem oder mehreren der Ansprüche 1 bis 13, zwischen dem Felgenrand (30) und einem oberen Wulst (21) angeordnet ist und ein zumindest teilweise radialer Schub daher auf den oberen Wulst (21) in einem Bereich (15) davon ausgeübt wird, in dem die Montagevorrichtung positioniert ist, sodass die Reifenflanke (20) mithilfe einer rollenden Bewegung des rotierenden Körpers (10) zumindest zum Teil verschoben wird und zumindest ein Abschnitt des oberen Wulstes (21) in den Felgenkanal (34) eingeführt wird.

19. Verfahren nach Anspruch 18, **dadurch gekennzeichnet, dass** der Schub der Bewegung des Montagekopfes (4) fast lotrecht zur Felge (3) versetzt wird.

20. Verfahren nach einem oder beiden Ansprüchen 18 und 19, **dadurch gekennzeichnet, dass**, nachdem ein Abschnitt des Wulstes (21) in den Felgenkanal (34) eingeführt wurde, der obere Wulst in einen Montagepunkt über dem Felgenrand gedrückt wird.

## Revendications

1. Appareil pour faciliter le montage ou le démontage d'un pneumatique de véhicule sur ou d'une jante, dans lequel ledit appareil comprend au moins un corps tournant qui tourne autour d'un axe et s'insère sur un câble (11), **caractérisé en ce que** le au moins un corps tournant (10) peut tourner sur le câble (11), dans lequel le au moins un corps tournant (10) se présente sous la forme d'un galet ayant une géométrie cylindrique et peut s'intercaler entre un talon de pneumatique et un rebord de jante, par conséquent le corps tournant pouvant, en cours de fonctionnement, rouler sur un flanc de pneumatique (20), poussant le talon supérieur du pneumatique (21) à l'intérieur d'un creux de la jante (34).

2. Appareil selon la revendication 1, **caractérisé en ce que** le corps tournant (10), pendant le montage ou le démontage, s'intercale entre un talon de pneumatique (21) et un rebord de jante (30), et le corps tournant (10), pendant le montage ou le démontage, roule au moins partiellement sur un flanc de pneumatique (20) et/ou sur le rebord de jante (30), ou se déplace d'un sommet du rebord de jante (32) vers une base du rebord de jante (31).

3. Appareil selon l'une des deux ou les deux revendications précédentes, **caractérisé en ce que** l'outil de montage (1) comprend des nombreux corps tournants (10), disposés de manière flexible l'un par rapport à l'autre et montés respectivement, de sorte que les corps tournants (10) peuvent tourner.

4. Appareil selon l'une ou plusieurs des revendications précédentes, **caractérisé en ce que** l'outil de montage (1) comprend des nombreux corps tournants (10) disposés dans une séquence selon un profilé façonné de la jante.

5. Appareil selon l'une ou plusieurs des revendications précédentes, **caractérisé en ce que** des corps tournants (10, 10', 10") de différents diamètres sont présents sur l'outil de montage (1).

6. Appareil selon l'une ou plusieurs des revendications précédentes, **caractérisé en ce que** les corps tournants (10) de plus grand diamètre sont situés à un centre, entre des corps tournants (10, 10', 10") ayant des diamètres légèrement plus petits.

7. Appareil selon l'une ou plusieurs des revendications précédentes, **caractérisé en ce qu'**un diamètre du au moins un corps tournant (10) correspond à une largeur d'un épaulement de jante (33).

8. Appareil selon l'une ou plusieurs des revendications précédentes, **caractérisé en ce que** des entretoises de plus petit diamètre (12) s'intercalent entre le au moins un corps tournant (10).

9. Appareil selon l'une ou plusieurs des revendications précédentes, **caractérisé en ce que** le au moins un corps tournant (10) est fabriqué en plastique.

10. Appareil selon l'une ou plusieurs des revendications précédentes, **caractérisé en ce que** l'outil de montage (1) ou le câble (11) présente une boucle (13) ou une poignée à chacune de ses extrémités.

11. Appareil selon l'une ou plusieurs des revendications précédentes, **caractérisé en ce qu'**une position longitudinale du au moins un corps tournant (10), sur le câble (11), est fixe ou mobile uniquement de façon limitée.

12. Appareil selon l'une ou plusieurs des revendications précédentes, **caractérisé en ce que** l'outil de montage (1) se compose de nombreuses mailles de chaîne reliées l'une à l'autre, et **en ce que** le au moins un corps tournant (10) fait partie d'une maille.

13. Appareil selon l'une ou plusieurs des revendications précédentes, **caractérisé en ce que** l'outil de montage (1) est un outil ou un appareil manuel, et **en ce qu'**il présente un arbre de sorte à permettre la rotation du au moins un corps tournant (10).

14. Système de montage composé d'un appareil de montage pour le montage ou le démontage d'un pneumatique de véhicule (2) sur ou d'une jante (3), et d'un outil de montage (1) selon l'une ou plusieurs des revendications précédentes.

15. Système de montage selon la revendication 14, **caractérisé en ce que** l'appareil de montage présente une tête de montage (4) pouvant agir sur un flanc de pneumatique (20) à un point de montage (42), où un talon (21) se situe au-dessus d'un rebord de jante (30), dans un mouvement (40) pratiquement perpendiculaire à la jante (3).

16. Système de montage selon l'une des deux ou les deux revendications 14 et 15, **caractérisé en ce que** l'outil de montage (1) est disposé sur un pneumatique de véhicule (2) ou sur une jante de roue (3), dans un secteur (15) qui est opposé au point de montage (42).

17. Système de montage selon l'une ou plusieurs des revendications 14 à 16, **caractérisé en ce que** le corps tournant (10) présente une configuration telle que, ledit corps tournant (10) roule au moins partiellement sur le flanc de pneumatique (20) ou sur le rebord de jante (30), de manière que la section du talon (21) s'introduit dans un creux (34) de la jante (3), lorsque, avec le mouvement de la tête de montage (4) sur le flanc de pneumatique (20), une poussée radiale (41) agit sur le talon (21) dans le secteur de l'outil de montage (1) qui se situe au-dessous du rebord de jante (30).

18. Méthode pour le montage ou le démontage d'un pneumatique de véhicule sur ou d'une jante, dans laquelle au moins un corps tournant de l'outil de montage (1), selon l'une ou plusieurs des revendications 1 à 13, s'intercale entre le rebord de jante (30) et un talon supérieur (21), et par conséquent, une poussée au moins partiellement radiale est exercée sur le talon supérieur (21) dans un secteur (15) où l'appareil de montage est positionné, de sorte que le flanc de pneumatique (20) se déplace au moins partiellement par un mouvement de roulement du corps tournant (10) et au moins une section du talon supérieur (21) s'introduit dans le creux de la jante (34).

19. Méthode selon la revendication 18, **caractérisée en ce que** la poussée du mouvement de la tête de montage (4) s'écarte presque perpendiculairement à la jante (3).

20. Méthode selon l'une des deux ou les deux revendications 18 et 19, **caractérisée en ce qu'**après l'introduction d'une section du talon (21) dans le creux de la jante (34), le talon supérieur est poussé dans un point de montage sur le rebord de jante.
